# NEUE EUROPÄISCHE PATENTSCHRIFT

(11) **EP 0 308 848 B2**
(45) Veröffentlichungstag und Bekanntmachung des Hinweises auf die Entscheidung über den Einspruch: **12.07.1995**
(45) Hinweis auf die Patenterteilung: 22.04.1992
(21) Anmeldenummer: 88115317.5
(22) Anmeldetag: 19.09.1988
(51) Int. Cl.: F24D 19/10, G05D 23/20

(54) **Verfahren und Vorrichtung zur Steuerung der Temperatur des Heizmediums einer Umlaufheizung mit einer Minimaltemperaturbegrenzung**
Method and device for temperature control of the heating medium of a closed loop heating system with minimum temperature limitation
Méthode et dispositif pour la régulation de la température d'un medium de chauffage d'un système de chauffage à circuit tenué avec limitation de la température minimale

(30) Priorität: 21.09.1987 AT 2372/87
(43) Veröffentlichungstag der Anmeldung: 29.03.1989
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant-Schonewelle B.V., 1100 DT Amsterdam (NL); Vaillant GmbH, 8953 Dietikon 1 (CH)
(72) Erfinder: Plate, Joachim, D-5632 Wermelskirchen (DE); Tenhumberg, Jürgen, Dr., D-5608 Radevormwald (DE)
(74) Vertreter: Heim, Johann-Ludwig, Dipl.-Ing.

(56) Entgegenhaltungen:
- EP-A- 0 065 033
- EP-A- 0 120 493
- DE-A- 2 549 561
- DE-A- 3 005 209
- DE-A- 3 312 479
- DE-A- 3 322 841

## Beschreibung

Die Erfindung bezieht sich auf ein Verfahren und eine Vorrichtung zur Steuerung der Temperatur eines Heizmediums einer mit einem Brenner und einer Umlaufpumpe betriebenen Umlaufheizung mit einer Minimaltemperaturbegrenzung gemäß den einleitenden Teilen der unabhängigen Patentansprüche.

Der Betrieb einer solchen Umlaufheizung wird üblicherweise in Abhängigkeit von der Temperatur des Heizmediums durch Steuerung der Brennstoffzufuhr zum Brenner gesteuert, die einsetzt, sobald diese Temperatur einen gewissen Grenzwert unterschreitet.

Die von der Umlaufpumpe geförderte Wassermenge bleibt hierbei konstant.

Eine in Abhängigkeit von der jeweiligen Außentemperatur erfolgende Steuerung des Brenners ordnet bekanntlich einer bestimmten gemessenen Außentemperatur eine entsprechende Soll-Temperatur des Heizmediums zu.

Den funktionellen Zusammenhang zwischen der Außentemperatur und der Temperatur des Heizmediums im Vorlauf zeigt eine sogenannte Heizkurve.

In einer richtig geplanten Umlaufheizung sorgt diese Steuerung dafür, daß die Wärmeabgabe der Heizkörper dem jeweiligen Wärmebedarf entspricht.

Zur Vermeidung der Kondensation von Wasserdampf auf der Abgasseite des Brennraumes wird häufig die Temperatur des Heizmediums nach unten begrenzt. Diese Form der Minimaltemperaturbegrenzung des Heizmediums wird üblicherweise dadurch erreicht, daß nach einer Unterschreitung einer vorgegebenen Minimaltemperatur von beispielsweise 40 °C, unabhängig vom momentanen Wärmebedarf, die Brennstoffzufuhr zum Brenner freigegeben wird, bis die vorgegebene Minimaltemperatur erreicht bzw. überschritten ist.

Der funktionelle Zusammenhang zwischen der Außentemperatur, d. h. dem jeweiligen Wärmebedarf, und der Soll-Temperatur des Heizmediums ist damit aufgehoben.

Somit wird nach Erreichen der Minimaltemperatur infolge der zu hohen Vorlauftemperatur dem Heizungssystem zu viel Wärme zugeführt.

Bei heute üblichen Niedertemperatur-Heizungen mit Auslegungsdaten der Vor- und Rücklauftemperatur von beispielsweise 65/50 °C wird oberhalb einer Außentemperatur von + 8 °C die Minimaltemperaturbegrenzung bei z.B. 40 °C wirksam. Somit wird an etwa hundert Tagen einer etwa zweihundertfünfzig Tage dauernden Heizperiode dem Heizungssystem infolge zu hoher Vorlauftemperatur zu viel Wärme zugeführt.

Aus der DE-OS 3322 841 ist ein Verfahren zur Steuerung der Temperatur des Heizmediums einer mit einem einstufigen Brenner und einer einstufigen Umlaufpumpe betriebenen Umlaufheizung mit einer Minimaltemperaturbegrenzung bekanntgeworden. Dabei wird die Umlaufpumpe dann ausgeschaltet, wenn die Mimimaltemperatur erreicht ist und keine Wärmeanforderung besteht. Auf diese Weise wird eine gewisse Verzögerung einer erneuten Brennereinschaltung bewirkt.

Aufgabe der Erfindung ist es, die Brennerschaltungen noch weiter zu reduzieren.

Erfindungsgemäß wird die Steuerung der Temperatur des Heizmediums in Abhängigkeit sowohl von der Ist-Temperatur des Heizmediums als auch der Außentemperatur sowohl durch Steuerung der Brennerleistung als auch durch Steuerung der Umlaufgeschwindigkeit des Heizmediums durchgeführt, wobei die Steuerung der Umlaufgeschwindigkeit des Heizmediums durch Verringerung der Drehzahl der Umwälzpumpe erst bei bzw. kurz vor Erreichen der vorgegebenen Minimaltemperatur des Heizmediums einsetzt.

Dadurch lassen sich unnötige Brennerschaltungen vermeiden und es wird eine bessere Anpassung der Wärmeproduktion der Umlaufheizung an den momentanen Wärmebedarf erzielt.

Demnach umfaßt eine zur Durchführung dieses Verfahrens geeignete Vorrichtung insgesamt einen in einem Heizungsumlauf eingeschlossenen, von einem Brenner beheizten Wärmetauscher und eine dem in einer Brennstoffversorgungsleitung angeordneten Brennstoffzufuhrventil dieses Brenners über Steuerleitungen zugeordnete Steuerung, einen an diese Steuerung über eine Steuerleitung angeschlossenen Außentemperaturfühler und einen im Heizungsumlauf angeordneten, über eine Steuerleitung der Steuerung angeschlossenen Temperaturfühler, sowie eine Umlaufpumpe, deren Drehzahl von der Steuerung über Steuerleitungen in Abhängigkeit sowohl von der im Heizungsumlauf gemessenen Ist-Temperatur als auch von der Außentemperatur steuerbar ist.
Dank der erfindungsgemäß erschlossenen Möglichkeit, nicht nur die Leistung des Brenners, sondern auch die Strömungsgeschwindigkeit des Heizmediums, also die Leistung der Umlaufpumpe von einer gemeinsamen Steuerung steuern zu lassen, kann die Brennerleistung wesentlich rationeller und ökonomischer dem tatsächlichen Bedarf angepaßt werden, insbesondere in der Übergangszeiten der Heizperiode durch eine Verkleinerung der geförderten Menge des Heizmediums.

Außerdem bringt die erfindungsgemäße Lösung den Vorteil, daß der Brenner seltener ein- und ausgeschaltet werden braucht, weil bei Erreichen der vorgegebenen Minimaltemperatur zuerst die geförderte Menge des Heizmediums verringert werden kann, ohne daß es einer Schaltung des Brenners bedarf. Daraus ergibt sich eine Verringerung der Schadstoffe in den Abgasen des Brenners und auch eine Verminderung des Energiebedarfs.

Die Steuerung der Umlaufpumpe ist in einen sogenannten Kompakt-Regler, dr von zwei Fühlern gesteuert für die Steuerung des Brennstoffzufuhrventiles des Brenners sorgt, problemlos zu integrieren.

Das Steuerungskonzept soll knapp vor Erreichen der vorgegebenen Minimaltemperatur des Heizmediums eine niedrigere Drehzahl der Umlaufpumpe vorsehen, wobei die Drehzahlverringerung eventuell auch in Abhängigkeit von der Außentemperatur und damit vom momentanen Wärmebedarf erfolgen kann. Somit wird eine durch die Minimaltemperaturbegrenzung notwendige Brennerschaltung in vielen Fällen vermieden.

Ein völliger Stillstand der Umlaufpumpe sollte jedenfalls seitens der Steuerung vermieden werden.

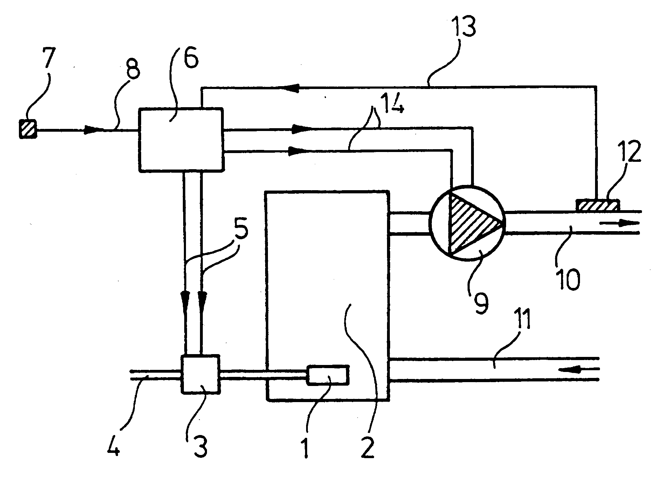

Die einzige Zeichnungsfigur ist ein Schema der Steuerung einer Umlaufheizung und zeigt den Heizungsumlauf mit dem darin eingeschlossenen, von einem Brenner 1 beheizten Wärmetauscher 2 und einer dem in einer Brennstoffversorgungsleitung 4 angeordneten Brennstoffzufuhrventil 3 über die Steuerleitungen 5 zugeordneten Steuerung 6.

Dieser Steuerung 6 ist über eine Steuerleitung 8 ein Außentemperaturfühler 7 und über eine Steuerleitung 13 ein Temperaturfühler 12 angeschlossen, der im Vorlauf 10 der aus dem Vorlauf 10 und dem Rücklauf 11 bestehenden Umlaufheizung angeordnet ist.

Die Drehzahl einer Umlaufpumpe 9 dieser Umlaufheizung ist über Steuerleitungen 14 von der gemeinsamen Steuerung 6 in Abhängigkeit von den Meßwerten der Temperaturfühler 7 (Außentemperatur) und 12 (Vorlauftemperatur) steuerbar.

## Patentansprüche

1. Verfahren zur Steuerung der Temperatur des Heizmediums einer mit einem Brenner und einer Umlaufpumpe betriebenen Umlaufheizung mit einer Minimaltemperaturbegrenzung, dadurch gekennzeichnet, daß diese Steuerung in Abhängigkeit sowohl von der Ist-Temperatur des Heizmediums als auch der Außentemperatur sowohl durch Steuerung der Brennerleistung als auch durch Steuerung der Umlaufgeschwindigkeit des Heizmediums durchgeführt wird, wobei die Steuerung der Umlaufgeschwindigkeit des Heizmediums durch Verringerung der Drehzahl der Umlaufpumpe erst bei bzw. kurz vor Erreichen der vorgegebenen Minimaltemperatur des Heizmediums eingesetzt wird.

2. Vorrichtung zur Durchführung des Verfahrens nach Anspruch 1 mit einem in einem geschlossenen mit Minimaltemperaturbegrenzung vorgesehenen Heizungsumlauf (10,11) eingeschlossenen, von einem Brenner (1) beheizten Wärmetauscher (2) und einer dem in einer Brennstoffversorgungsleitung (4) angeordneten Brennstoffzufuhrventil (3) dieses Brenners (1) über Steuerleitungen (5) zugeordneten Steuerung (6), gekennzeichnet durch einen an diese Steuerung (6) über eine Steuerleitung (8) angeschlossenen Außentemperaturfühler (7) und einen im Heizungsumlauf (10, 11) angeordneten, über eine Steuerleitung (13) der Steuerung (6) angeschlossenen Temperaturfühler (12) sowie eine Umlaufpumpe (9), deren Drehzahl von der Steuerung (6) erst bei bzw. kurz vor Erreichen der vorgegebenen Minimaltemperatur des Heizmdediums über Steuerleitungen (14) in Abhängigkeit sowohl von der im Heizungsumlauf (10, 11) gemessenen Temperatur als auch von der Außentemperatur verringert ist.

## Claims

1. A method of controlling the temperature of the heating fluid of a circulating heating system operated with a burner and a circulating pump to maintain said temperature above a lower temperature limit, characterized in that said control is carried out in dependence on the actual temperature of the heating fluid and on the outdoor temperature by a control of the burner power and by a control of the velocity of the heating fluid being circulated and that the control of the velocity of the heating fluid being circulated is initiated by a reduction of the pump speed only when or shortly before the predetermined lower temperature limit of the heating fluid has been reached.

2. An apparatus for carrying out the process according to claim 1 equipped with a heat exchanger (2), which is heated by a burner (1) and is included in a closed heating circulating system (10, 11), which is provided with means for determining a lower temperature limit, with a controller (6), which is associated by control lines (5) with a fuel supply valve (3) of that burner (1), which valve is arranged in a fuel supply line (4), characterized by an outdoor temperature sensor (7), which is connected to said controller (6) by a control line (8), by a temperature sensor (12), which is arranged in the heating circulation system (10, 11) and is connected to the controller (6) by a control line (13), and by a circulating pump (9), the speed of which can be reduced by the controller (6) via control lines (14) in dependence on the temperature measured in the heating circulating system (10, 11) and on the outdoor temperature only when or shortly before the predetermined lower temperature limit of the heating fluid has been reached.

## Revendications

1. Procédé pour la régulation de la température du fluide d'un système de chauffage à circulation chauffé par un brûleur et avec une pompe de circulation, avec seuil de température minimum, caractérisé par le fait que cette régulation est réalisée en fonction aussi bien de la température effective du fluide chauffant que de la température extérieure par variation aussi bien de la puissance du brûleur que de la vitesse de circulation du fluide chauffant, la variation de la vitesse de circulation du fluide chauffant par réduction de la vitesse de la pompe de circulation ne prenant effet qu'au moment où le seuil de température minimum préréglé du fluide chauffant est atteint, ou peu avant.

2. Dispositif pour l'exécution du procédé suivant la revendication 1, avec un échangeur de chaleur (2) incorporé dans un circuit de chauffage fermé (10, 11) avec seuil de température minimum et chauffé par un brûleur (1), et un régulateur (6) agissant moyennant des lignes (5) sur une soupape d'admission de combustible (3) installée dans une conduite (4) alimentant le brûleur (1), et caractérisé par une sonde thermométrique extérieure (7) reliée au régulateur (6) par une ligne (8), et une sonde thermométrique (12) disposée dans le circuit de chauffage (10, 11) et reliée au régulateur (6) par une ligne (13), ainsi qu'une pompe de circulation (9) dont la vitesse est réduite par le régulateur (6) relié à cette pompe par des lignes (14), en fonction de la température du fluide circulant dans le circuit de chauffage (10, 11) de même que de la température extérieure, et ce au moment où la température minimale préréglée du fluide chauffant est atteinte, ou peu avant.
